(19) Europäisches Patentamt
European Patent Office
Office européen des brevets

(11) **EP 4 379 602 A1**

(12) **EUROPÄISCHE PATENTANMELDUNG**

(43) Veröffentlichungstag:
**05.06.2024 Patentblatt 2024/23**

(21) Anmeldenummer: **22210070.3**

(22) Anmeldetag: **29.11.2022**

(51) Internationale Patentklassifikation (IPC):
*G06N 3/02* (2006.01)   *G06N 3/094* (2023.01)
*G06N 20/00* (2019.01)

(52) Gemeinsame Patentklassifikation (CPC):
**G06N 3/045; G06N 3/02; G06N 3/094; G06N 20/00;
G10L 15/01**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Frequentis AG
1100 Wien (AT)**

(72) Erfinder:
• **Gringinger, Eduard
1100 Wien (AT)**

• **Poiger, Michael
1100 Wien (AT)**

(74) Vertreter: **Sonnenberg Harrison Partnerschaft
mbB
Herzogspitalstraße 10a
80331 München (DE)**

Bemerkungen:
Geänderte Patentansprüche gemäss Regel 137(2)
EPÜ.

(54) **VERFAHREN FÜR EINE ZERTIFIZIERUNG VON PERIODISCH ADAPTIERTEN
MASCHINENLERNEN-MODELLEN**

(57)     Ein computerimplementierts Verfahren (10) zur Verifizierung von Maschinenlernmodellen in sicherheitskritischen Umgebungen wird offenbart. Das computerimplementierte Verfahren (10) umfasst ein Ermitteln (S120) technischer Kennwerte (25) und operativer Kennwerte (30) für ein ausgewähltes operationelles Maschinenlernmodell (15) in einer Simulationsumgebung (20), ein kontinuierliches Testen (S130) des ausgewählten operationellen Maschinenlernmodells (15), ein Erzeugen (S150) einer Anzahl n optimierter Maschinenlernmodelle (15a-15n), eine Auswahl (S160) eines der n optimierten Maschinenlernmodelle (15a-15n) und ein Verifizieren (S170) des ausgewählten optimierten Maschinenlernmodells (15a-15n). Das kontinuierliche Testen (S130) umfasst ein Erfassen (S140) von einem operativen Feedback (35). Das Erzeugen (S150) der n optimierten Maschinenlernmodelle (15a-15n) erfolgt unter Berücksichtigung des operativen Feedbacks (35). Das Verifizieren (S170) erfolgt mit einem Verifikationssimulator (40).

FIG. 1

**Beschreibung**

**TECHNISCHES GEBIET DER ERFINDUNG**

Die Erfindung betrifft ein Verfahren für eine Zertifizierung von periodisch adaptierten Maschinenlernen-Modellen.

**HINTERGRUND DER ERFINDUNG**

Maschinelles Lernen beziehungsweise Maschinenlernen (engl. "machine learning") bezeichnet eine Unterkategorie künstlicher Intelligenz. Bei dem Maschinenlernen werden Computeralgorithmen unter Verwendung von Trainingsdaten trainiert. Auf Grundlage dieses Trainings sind die Computeralgorithmen in der Lage, Muster und Zusammenhänge in Datensätzen zu erkennen und selbstständig Entscheidungen, Empfehlungen beziehungsweise Klassifikationen abzuleiten.

Aufgrund der Vielzahl der durch einen Maschinenlernalgorithmus in Betracht gezogenen Aspekte bei der Erkennung von Mustern und Zusammenhängen ist es für den Menschen kaum möglich, eine durch den Maschinenlernalgorithmus getroffene Entscheidung, Empfehlungen beziehungsweise Klassifikation eindeutig nachzuvollziehen. Ferner ist eine Prognose der Entscheidung, Empfehlung beziehungsweise der Klassifikation durch den Maschinenlernalgorithmus nicht möglich, da diese von dem Training des Maschinenlernalgorithmus abhängt. Es handelt sich demnach bei den Maschinenlernalgorithmen um sogenannte "nicht-deterministische Algorithmen".

Maschinenlernen wird in einer Vielzahl von Anwendungsfeldern eingesetzt. Beispielsweise können trainierte Maschinenlernalgorithmen zur Erkennung und Klassifikation von Sprachaufnahmen verwendet werden. In diesem Anwendungsfeld wird der Maschinenlernalgorithmus anhand von Trainingsdaten wie beispielsweise unterschiedlichen Sprachaufnahmen trainiert und anschließend für die Klassifikation neuer Sprachaufnahmen verwendet.

In sicherheitskritischen Anwendungen wie beispielsweise im Bereich der Flugsicherung oder im Bereich der öffentlichen Sicherheit kann die Spracherkennung ebenfalls eingesetzt werden, um Sprachaufnahmen aus Funksprüchen oder weiteren Audiodateien in eine maschinell verarbeitbare Textform zu überführen. Allerdings müssen die verwendeten trainierten Maschinenlernalgorithmen in diesen Bereichen hohen Anforderungen genügen, um für die sicherheitskritischen Anwendungen zertifiziert zu werden, und um in diesen Anwendungen eingesetzt werden zu dürfen. Ein wesentlicher Aspekt bei dieser Zertifizierung liegt in der Vorhersagbarkeit der durch den Maschinenlernalgorithmus getroffenen Klassifikation.

Im Stand der Technik sind unterschiedliche Verfahren bekannt, um die Vorhersagbarkeit von durch Maschinenlernalgorithmen getroffenen Entscheidungen beziehungsweise Klassifikationen zu erhöhen und diese Vorhersagbarkeit auch bei gezielten Angriffen auf den Maschinenlernalgorithmus sicherzustellen.

Goodfellow, Ian, and Nicolas Papernot. "The Challenge of Verification and Testing of Machine Learning." Cleverhans, 14 June 2017, http://www.cleverhans.io/security/privacy/ml/2017/06/14/verification.html beschreibt ein Verfahren für ein Training eines Maschinenlernalgorithmus, um diesen Maschinenlernalgorithmus gegen potenzielle feindliche Angriffe zu schützen. Hierzu befasst sich die Veröffentlichung mit der Frage, wie sichergestellt werden kann, dass sich ein Maschinenlernalgorithmus auch in Grenzbereichen vorhersagbar verhalten wird. Zur Lösung dieses Problems wird die Verwendung einer "CleverHans library" vorgeschlagen. Hierbei handelt es sich um eine Python-Library zum Benchmarking von Maschinenlernalgorithmen.

Papernot, Nicolas, et al. "Towards the science of security and privacy in machine learning." arXiv preprint arXiv:1611.03814 (2016) befasst sich mit der Klassifizierung von Ansätzen zur Erhöhung der Sicherheit und den Schutz der Privatsphäre in Maschinenlern-Systemen. Es werden mögliche Bedrohungsszenarien dargestellt und aus diesen Bedrohungsszenarien Maßnahmen abgeleitet, um die Sicherheit von Maschinenlern-Systemen zu erhöhen.

**ZUSAMMENFASSUNG DER ERFINDUNG**

Der Erfindung liegt das technische Problem zugrunde, ein computerimplementierts Verfahren zur Verifizierung von Maschinenlernmodellen in sicherheitskritischen Umgebungen bereitzustellen. Das computerimplementierte Verfahren umfasst ein Ermitteln technischer Kennwerte und operativer Kennwerte für ein ausgewähltes operationelles Maschinenlernmodell in einer Simulationsumgebung, ein kontinuierliches Testen des ausgewählten operationellen Maschinenlernmodells, ein Erzeugen einer Anzahl n optimierter Maschinenlernmodelle, eine Auswahl eines der n optimierten Maschinenlernmodelle und ein Verifizieren des ausgewählten optimierten Maschinenlernmodells. Das kontinuierliche Testen umfasst ein Erfassen eines operativen Feedbacks. Das Erzeugen der n optimierten Maschinenlernmodelle erfolgt unter Berücksichtigung des operativen Feedbacks. Das Verifizieren erfolgt mit einem Verifikationssimulator.

In einem Aspekt umfasst das computerimplementierte Verfahren ferner ein Überführen des ausgewählten operationellen Maschinenlernmodells in eine Simulationsumgebung.

In einem weiteren Aspekt erfolgt das Überführen anhand von mindestens einer Erkennungsrate.

In einem weiteren Aspekt umfassen die technischen Kennwerte mindestens eines von einer Wortfehlerrate oder einer Zeichenfehlerrate. Ferner umfassen die operativen Kennwerte mindestens eines von einer Rufzeichenerkennung, einer Kommandoerkennung und einer Werteerkennung.

In einem weiteren Aspekt werden die technischen Kennwerte und/oder die operativen Kennwerte mit Hilfe von Data Management ermittelt. Bei dem Ermitteln werden beispielsweise Referenzdaten, Zeitstempel, Umgebungsdaten sowie Transkriptionen und Interpretationsergebnisse herangezogen.

In einem weiteren Aspekt erfolgt das kontinuierliche Testen anhand von Testdaten und Trainingsdaten.

In einem weiteren Aspekt erfolgt das Verifizieren anhand vordefinierter Testszenarien und/oder vordefinierter Kennzahlen.

In einem weiteren Aspekt wird eine Verwendung eines computerimplementierten Verfahrens zur Verifizierung von nicht deterministischen Modellen in sicherheitskritischen Umgebungen offenbart.

## BESCHREIBUNG DER FIGUREN

Fig. 1 zeigt eine Übersicht eines Computersystems ausführend ein Verfahren zur Verifizierung von Maschinenlernmodellen in sicherheitskritischen Umgebungen.

Fig. 2 zeigt ein Prozessablaufdiagramm darstellend ein computerimplementiertes Verfahren zur Verifizierung von Maschinenlernmodellen in sicherheitskritischen Umgebungen.

## DETAILLIERTE BESCHREIBUNG DER ERFINDUNG

Die Erfindung wird nun auf der Grundlage der Zeichnungen beschrieben. Es wird davon ausgegangen, dass die hier beschriebenen Ausführungsformen und Aspekte der Erfindung nur Beispiele sind und den Schutzumfang der Ansprüche in keiner Weise einschränken. Die Erfindung wird durch die Ansprüche und deren Äquivalente definiert. Es wird davon ausgegangen, dass Merkmale eines Aspekts oder einer Ausführungsform der Erfindung mit einem Merkmal eines anderen Aspekts oder anderer Aspekte und/oder Ausführungsformen der Erfindung kombiniert werden können.

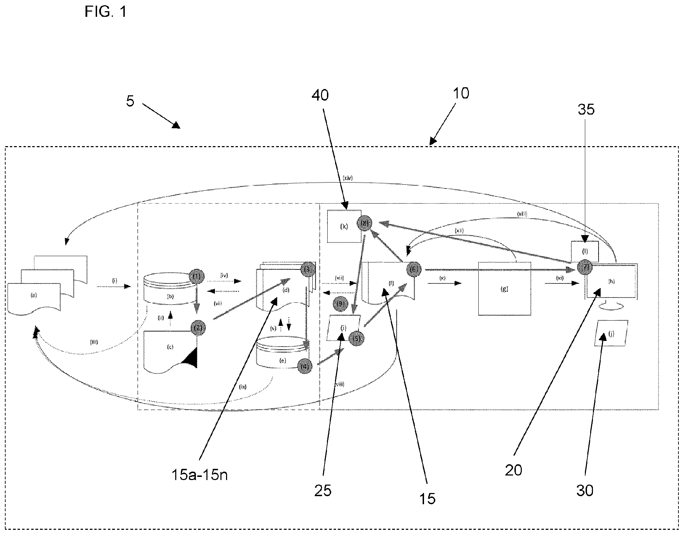

Fig. 1 zeigt eine Übersicht eines Computersystems 5 ausführend ein computerimplementiertes Verfahren 10 zur Verifizierung von Maschinenlernmodellen in sicherheitskritischen Umgebungen. Das Computersystem 5 umfasst ein operationelles Maschinenlernmodell 15, eine Simulationsumgebung 20 sowie technische Kennwerte 25 und operative Kennwerte 30. Ferner umfasst das Computersystem 5 eine Anzahl n optimierter Maschinenlernmodelle 15a-15n.

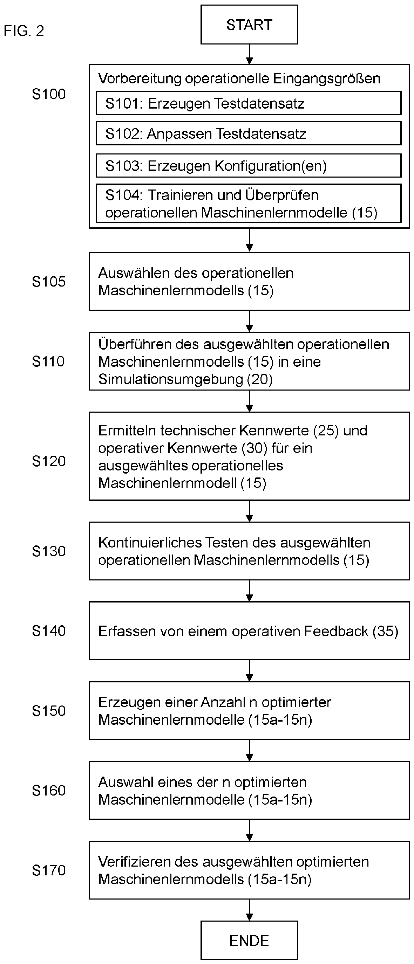

Fig. 2 zeigt ein Prozessablaufdiagramm darstellend das computerimplementierte Verfahren 10 zur Verifizierung von den Maschinenlernmodellen 15 in sicherheitskritischen Umgebungen. Das computerimplementierte Verfahren 10 wird beispielsweise im Bereich der Spracherkennung (engl. "Speech-to-Text") bei der Flugsicherung oder im Bereich der öffentlichen Sicherheit eingesetzt. Die Maschinenlernmodelle 15 umfassen beispielsweise Maschinenlernalgorithmen der Klassen 1 bis 3 nach EUROCAE WG114 *draft*. Diese Klassen werden im Folgenden erläutert.

Klasse 1 umfasst vollständig erklärbare Algorithmen, welche konform mit bestehenden Zertifizierungsprozessen sind. Die vollständig erklärbaren Algorithmen sind demnach deterministische Algorithmen, welche Logiken umfassen, die sich eindeutig nachvollziehen lassen. Diese Logiken werden während der Verwendung für die Spracherkennung in sicherheitskritischen Umgebungen eingefroren, um eine Vorhersagbarkeit der durch den Maschinenlernalgorithmus getroffenen Klassifikation sicherzustellen.

Klasse 2 umfasst lernbasierte Algorithmen, welche teilweise erklärbar sind. Die teilweise erklärbaren Algorithmen umfassen Logiken, welche in einer Designphase festgelegt werden und welche Logiken während der Verwendung für die Spracherkennung in sicherheitskritischen Umgebungen eingefroren werden, um eine Vorhersagbarkeit der durch den Maschinenlernalgorithmus getroffenen Klassifikation sicherzustellen.

Klasse 3 umfasst nicht erklärbare Algorithmen, welche für einen menschlichen Nutzer nicht nachvollziehbar sind. Diese nicht erklärbaren Algorithmen umfassen Neuronalen Netze, welche mit Hilfe von Trainingsdatensätzen (engl. "ground truth") trainiert werden. Diese Algorithmen werden während der Verwendung für die Spracherkennung in sicherheitskritischen Umgebungen eingefroren, um eine Vorhersagbarkeit und Nachvollziehbarkeit der durch den Maschinenlernalgorithmus getroffenen Klassifikation sicherzustellen.

Das computerimplementierte Verfahren 10 ist darauf gerichtet, Maschinenlernalgorithmen der Klassen 2 und 3 für sicherheitskritische Anwendungen zu verifizieren beziehungsweise zu zertifizieren. Diese Verifizierung erfordert, dass die von den Maschinenlernalgorithmen getroffene Entscheidung beziehungsweise Klassifikation über einen Inhalt einer Audiodatei (zum Beispiel in der Form einer verlustfreien ".WAV-Datei") bei der Spracherkennung vorhersagbar und nachvollziehbar ist. Ziel ist es demnach, den Inhalt der Audiodatei zuverlässig und wiederholbar zu erkennen (sog.

"Transkription").

Hierfür werden zunächst in Schritt S100 operationelle Daten für eine Verarbeitung durch das Maschinenlernmodell vorbereitet, wobei die operationellen Daten aufgezeichnete Daten aus einem realen Flugbetrieb bezeichnen. Dieses Vorbereiten der operationellen Daten umfasst beispielsweise die Schritte S101-S104, welche nachfolgend für das Beispiel der Spracherkennung beschrieben werden. Diese Schritte S101-S104 lassen sich für andere Anwendungsfälle anpassen.

Im Beispiel der Spracherkennung wird zunächst in Schritt S101 ein Speech-to-Text-Trainingsdatensatz aus vordefinierten Testszenarien und/oder vordefinierten Kennzahlen erzeugt. Diese vordefinierten Testszenarien umfassen beispielsweise eine feste Anzahl von Audioaufnahmen mit zugehörigen Transkriptionen. Diese Audioaufnahmen können beispielsweise Audioaufnahmen von üblichen Situationen im Flugverkehr, bei Start- und/oder Landung oder auch während der Fortbewegung auf dem Rollfeld sein. Beispielsweise umfasst die Audioaufnahme eine kurze Aufzeichnung eines Sprechfunkverkehrs zwischen einem Tower und einem Flugzeug. Die zugehörige Transkription stellt den Inhalt dieser Audioaufnahme in Textform, wie beispielsweise "airline four papa victor, cross runway zero nine" dar.

Dieses Erzeugen der Trainingsdaten erfolgt in Abhängigkeit eines Anwendungsfalls der Spracherkennung. Dieser Anwendungsfall umfasst im vorliegenden Fall mindestens eines von einer Rufzeichenerkennung, einer Kommandoerkennung und einer Werteerkennung. Im vorgenannten Beispiel ist der Anwendungsfall beispielsweise "Spracherkennung". Denkbar sind auch andere Anwendungsfälle, die andere Trainingsdatensätze benötigen. Die Auswahl des Trainingsdatensatzes kann ferner beispielsweise auch auf Grundlage der Audioqualität der Aufnahmen erfolgen.

Der Trainingsdatensatz für die Rufzeichenerkennung umfasst beispielsweise Audio und Transkriptionsdaten einer Kommunikation üblicherweise über Funksprüche zwischen einem Piloten und einem Fluglotsen. Beispielsweise kann der Fluglotse dem Piloten den Funkspruch "Austrian three six four lineup runway three one" übermitteln. Dieser Funkspruch beinhaltet ein Rufzeichen (sog. "Callsign") des Flugzeuges des Piloten (in diesem Fall "Austrian three six four"), einen Befehl (in diesem Fall "lineup") sowie einen Ort, an dem der Befehl ausgeführt werden soll (in diesem Fall "runway three one"). Der Funkspruch wird von dem Piloten des Flugzeuges gemäß einer sog. readback-Syntax wiederholt und lautet im vorliegenden Beispiel "lineup runway three one Austrian three six four". Die Wiederholung des Funkspruchs umfasst den Befehl (lineup") sowie den Ort, an dem der Befehl ausgeführt werden soll ("runway three one") sowie das Rufzeichen des Flugzeuges des Piloten ("Austrian three six four"). Der Trainingsdatensatz für die Befehlserkennung umfasst beispielsweise eine Audioaufzeichnung sowie eine Transkription des Funkspruchs von dem Lotsen an den Piloten sowie eine Audioaufzeichnung sowie eine Transkription der Wiederholung des Funkspruchs von dem Piloten an den Lotsen.

Weitere Beispiele der Funksprüche sind in dem Heft "A Guide to Phraseology", European General Aviation Safety Team und European Organisation for the Safety of Air Navigation, 2010, abgerufen am 21. November 2022 unter https://www.easa.europa.eu/en/downloads/24164/e angeführt.

Ferner wird in Schritt S102 der Speech-to-Text-Trainingsdatensatz an ein zu zertifizierendes operationelles Maschinenlernmodell 15 angepasst. Dieses Anpassen des Speech-to-Text-Trainingsdatensatzes umfasst beispielsweise eine Bereinigung des Speech-to-Text-Trainingsdatensatzes. Diese Bereinigung umfasst beispielsweise ein Entfernen von Störgeräuschen (engl. "denoising") oder eine Anpassung eines Lautstärkepegels (engl. "audio level").

Ferner werden in Schritt S103 unterschiedliche Konfigurationen für den Speech-to-Text-Trainingsdatensatz erzeugt. Diese unterschiedlichen Konfigurationen umfassen Eigenschaften für den Speech-to-Text-Trainingsdatensatz, welche auf den konkreten Anwendungsfall abgestimmt sind. Die Eigenschaften umfassen beispielsweise spezielle Ausdrucksweisen (engl. "phraseology") für den ausgewählten Anwendungsfall. Die Eigenschaften können beispielsweise mit Hilfe einer handelsüblichen Software wie Google Cloud Speech-to-Text ermittelt werden. Diese erzeugten Konfigurationen werden für ein kontinuierliches Testen (siehe Schritt S130) verwendet.

Die Schritte S101-S103 werden üblicherweise mehrfach durchgeführt, um etwaige Spezialisierungen beziehungsweise Anpassungen durchführen zu können. Diese Spezialisierungen umfassen beispielsweise eine Lokalisierung der Datensätze für bestimmte Wegpunkte entlang einer Flugroute oder beispielsweise die Verwendung von Datensätzen mit einem regionstypischen Sprachakzent. Hierdurch entsteht eine Vielzahl von operationellen Maschinenlernmodellen 15. Diese operationellen Maschinenlernmodelle 15 werden in Schritt S104 anhand von den vordefinierten Testszenarien evaluiert. Diese vordefinierten Testszenarien umfassen Trainingsdaten, welche außerhalb des Speech-to-Text-Trainingsdatensatzes aus Schritten S101-S103 liegen.

Die Vielzahl von operationellen Maschinenlernmodellen 15 werden in Schritt S104 anhand dieser vordefinierten Testszenarien trainiert und anschließend mittels dieser vordefinierten Testszenarien überprüft. Beispielsweise können 80% der Daten aus den vordefinierten Testszenarien für das Training der Vielzahl der operationellen Maschinenlernmodelle 15 und 20% der Daten aus den vordefinierten Testszenarien für die Evaluierung der Vielzahl der operationellen Maschinenlernmodelle 15 verwendet werden. Die operationellen Maschinenlernmodelle 15 können beispielsweise in einem Gitlab Repository gespeichert sein.

Auf Grundlage der Vorbereitung der operationellen Daten in Schritt S100 wird in Schritt S105 ein zu zertifizierendes operationelles Maschinenlernmodell 15 ausgewählt. Diese operationelle Maschinenlernmodell 15 umfasst beispielsweise eines von einem Modell für eine Rufzeichenerkennung, einem Modell für eine Kommandoerkennung und einem Modell für eine Werteerkennung umfasst. Das operationelle Maschinenlernmodell kann ferner auch eines von einem Modell für länderspezifische Spracherkennung unter Berücksichtigung von Sprachdialekten oder einem Modell für Aufnahmen unterschiedlicher Audioqualität umfassen. Diese unterschiedliche Audioqualität kann beispielsweise bei einer Funkkommunikation zwischen einem Piloten und einem Fluglotsen entstehen, wenn Funksysteme oder -komponenten unterschiedlicher Hersteller verwendet werden. Zudem können beispielsweise thermische oder atmosphärische Störungen die Audioqualität beeinflussen.

Das computerimplementierte Verfahren 10 umfasst ferner ein Überführen des ausgewählten operationellen Maschinenlernmodells 15 in eine Simulationsumgebung 20 in Schritt S110. Eine Auswahl für das Überführen des operationellen Maschinenlernmodells 15 erfolgt beispielsweise anhand von mindestens einem von einer Erkennungsrate, einem/r Fehlerrate oder einem/s Confidence Level.

Das computerimplementierte Verfahren 10 umfasst ferner ein Ermitteln technischer Kennwerte 25 und operativer Kennwerte 30 für ein ausgewähltes operationelles Maschinenlernmodell 15 in der Simulationsumgebung 20 in Schritt S120. Die technischen Kennwerte 25 umfassen beispielsweise mindestens eines von einer Wortfehlerrate oder einer Zeichenfehlerrate. Die operativen Kennwerte 30 umfassen beispielsweise eines von einer Rufzeichenerkennung, einer Kommandoerkennung und einer Werteerkennung. Die technischen Kennwerte 25 und/oder die operativen Kennwerte 30 werden mit Hilfe von Data Management ermittelt. Dieses Data Management umfasst beispielsweise die Verwendung von tabellenbasierten Kalkulationsprogrammen oder auch die Verwendung einer Statistiksoftware zur Verwaltung und Auswertung der Daten. Bei dem Ermitteln der technischen Kennwerte 25 und/oder die operative Kennwerte 30 werden beispielsweise Referenzdaten, Zeitstempel, Umgebungsdaten sowie Transkriptionen und Interpretationsergebnisse herangezogen. Die Referenzdaten umfassen beispielsweise Transkriptionen von Audioaufnahmen aus der Flugsicherung, Werte zu den Referenzdaten oder auch Rufzeichen zu den jeweiligen Referenzdaten. Der Zeitstempel umfasst beispielsweise einen UTC-Zeitstempel. Die Umgebungsdaten umfassen beispielsweise eine Anzahl von Flügen im System oder eine Fluglinie. Die Transkriptionen und Interpretationsergebnisse umfassen

Das computerimplementierte Verfahren 10 umfasst ferner ein kontinuierliches Testen in Schritt S130 des ausgewählten operationellen Maschinenlernmodells 15. Das kontinuierliche Testen S130 umfasst zudem ein Erfassen S140 von einem operativen Feedback 35. Die Erfassung des operativen Feedbacks erfolgt beispielsweise aus Logdaten von Systemen beispielsweise für eine Kommunikation zwischen Piloten und Lotsen oder beispielsweise aus geänderten operationellen Daten. Die Erfassung des operativen Feedbacks umfasst ferner eine Beurteilung darüber, ob beispielsweise Audioaufzeichnungen korrekt erkannt wurden oder ob Korrekturen an diesen Informationen vorgenommen werden mussten. In einem weiteren Aspekt erfolgt das kontinuierliche Testen S130 anhand von Testdaten und Trainingsdaten, welche beispielsweise im operativen Betrieb oder im Simulationsbetrieb aufgezeichnet und mit zugehörigen Metadaten versehen werden. Die Testdaten umfassen beispielsweise Stimmen-Rohdaten (engl. "Voice Raw Data") sowie Transkriptionen, Interpretationen und Szenarien zu den Stimmen-Rohdaten. Die Trainingsdaten umfassen beispielsweise Stimmen-Rohdaten und Metadaten (engl. "Metadata"). Die Trainingsdaten liegen beispielsweise als .WAV-Dateien mit zugehörigen Transkriptionen vor. Die Trainingsdaten können beispielsweise mit dem Softwareverwaltungsprogramm "Tableau Data Management" verarbeitet werden.

Das computerimplementierte Verfahren 10 umfasst ferner ein Erzeugen in Schritt S 150 einer Anzahl n optimierter Maschinenlernmodelle 15a-15n. Diese Anzahl n optimierter Maschinenlernmodelle 15a-15n unterscheidet sich beispielsweise hinsichtlich der beim Trainieren und Überprüfen der verschiedenen operationellen Maschinenlernmodelle 15a-15n verwendeten Trainingsdaten voneinander. Das Erzeugen S150 der n optimierten Maschinenlernmodelle 15a-15n erfolgt unter Berücksichtigung des operativen Feedbacks 35.

Das computerimplementierte Verfahren 10 umfasst ferner eine Auswahl in Schritt S160 eines der n optimierten Maschinenlernmodelle 15a-15n. Die Auswahl kann beispielswiese anhand von einem Nutzungsfall erfolgen. Es ist jedoch auch möglich, dass mehrere der Mehrzahl der n optimierten Maschinenlernmodelle 15a-15n nacheinander ausgewählt werden. In diesem Fall wird Schritt S170 mehrmals durchgeführt.

Das computerimplementierte Verfahren 10 umfasst ferner ein Verifizieren in Schritt S170 des ausgewählten optimierten Maschinenlernmodells 15a-15n. Das Verifizieren S170 erfolgt mit einem Verifikationssimulator 40. Der Verifikationssimulator 40 umfasst einen Replay-Teil und einen Evaluierungs-Teil. Der Replay-Teil des Verifikationssimulators 40 ermöglicht es, Szenarien abzuspielen. Diese Szenarien umfassen beispielsweise Flugpläne, sequenzierte .WAV-Dateien mit zugehörigen Transkriptionen und/oder Interpretationen. Der Evaluierungs-Teil des Verifikationssimulators 40 ist zeitlich mit dem Replay-Teil abgestimmt und empfängt Referenzinformationen sowie die von dem Maschinenlernmodell 15 generierten Ergebnisse wie beispielsweise das Rufzeichen oder die Transkription der WAV-Datei.

In einem weiteren Aspekt erfolgt das Verifizieren S170 anhand vordefinierter Testszenarien und/oder vordefinierter Kennzahlen. Diese vordefinierten Testszenarien umfassen beispielsweise zehn aufgezeichnete Rufzeichenansagen einer vordefinierten Luftfahrtgesellschaft wie Austrian Airlines. Diese vordefinierten Testszenarien können beispielsweise auch zehn Rufzeichenansagen vordefinierter, unterschiedlicher Luftfahrtgesellschaften sein. Hierdurch kann das Maschinenlernmodell beispielsweise für unterschiedliche Dialekte oder Akzente verifiziert werden.

Die vordefinierten Kennzahlen beispielsweise eines von einer Wortfehlerrate (engl. "word error rate"; kurz "WER"), einer Zeichenfehlerrate (engl. "charakter error rate"; kurz "CER"), einem F-Maß (engl. "F-measure" beziehungsweise "F1-score"; kurz "F1"), einer Kommandoerkennungsrate (engl. "coammand recocgnition rate"; kurz "RcR"), einer Kommandoerkennungsfehlerrate (engl. "command recognition error rate"; kurz "ErR"), einer Ablehnungsrate bei der Befehlserkennung (engl. "command recognition rejection rate"; kurz "RjR"), einer Rufzeichenerkennungsrate (engl. "callsign recognition rate"; kurz "CaR"), einer Rufzeichenerkennungsfehlerrate (engl. "callsign recognition error rate"; kurz "CaE"), einer Ablehnungsrate bei der Rufzeichenerkennung (engl. "callsign recognition rejection rate"; kurz: "CaRj") oder einer Rate nicht klassifizierter Wörter (engl. "unclassified word rate"; kurz "UnClWR").

Eine Formel zur Berechnung der Wortfehlerrate WER ist nachfolgend dargestellt. Hierbei bezeichnet $S_w$ die Anzahl der Wortersetzungen, $D_w$ die Anzahl der Wortstreichungen, $I_w$ die Anzahl der Worteinfügungen und $N_w$ die Anzahl der Wörter eines (Referenz-)Textes.

$$WER\ [\%] = \frac{S_w + D_w + I_w}{N_w} * 100$$

Eine Formel zur Berechnung der Zeichenfehlerrate CER ist nachfolgend dargestellt. Hierbei bezeichnet S die Anzahl der Ersetzungen, D die Anzahl der Streichungen, I die Anzahl der Einfügungen und N die Anzahl der Zeichen in einem (Referenz-)Begriff beziehungsweise Text.

$$CER\ [\%] = \frac{S + D + I}{N} * 100$$

Eine Formel zur Berechnung des F-Maßes F1 ist nachfolgend dargestellt. Das F-Maß wird durch die Faktoren "Genauigkeit" und "Rücknahme" bestimmt.

$$Genauigkeit$$
$$= \frac{Anzahl\ richtig\ positiver\ Ergebnisse}{Anzahl\ richtig\ positver\ Ergebnisse + Anzahl\ falsch\ positiver\ Ergebnisse}$$

$$Rücknahme$$
$$= \frac{Anzahl\ falsch\ positiver\ Ergebnisse}{Anzahl\ richtig\ positver\ Ergebnisse + Anzahl\ falsch\ positiver\ Ergebnisse}$$

$$F1\ [\%] = \frac{Genauigkeit * Rücknahme}{Genauigkeit + Rücknahme} * 100$$

Eine Formel zur Berechnung der Kommandoerkennungsrate RcR ist nachfolgend dargestellt.

$$RcR\ [\%] = \frac{Anzahl\ der\ Treffer}{Gesamtzahl\ der\ Kommandos} * 100$$

Eine Formel zur Berechnung der Kommandoerkennungsfehlerrate ErR ist nachfolgend dargestellt.

$$ErR\ [\%] = \frac{Anzahl\ der\ Ersetzungen + Anzahl\ der\ Einsetzungen}{Gesamtzahl\ der\ Kommandos} * 100$$

Eine Formel zur Berechnung der Ablehnungsrate bei der Befehlserkennung RjR ist nachfolgend dargestellt.

$$RjR\ [\%] = \frac{Anzahl\ Streichungen}{Gesamtzahl\ der\ Kommandos} * 100$$

Eine Formel zur Berechnung der Rufzeichenerkennungsrate CaR ist nachfolgend dargestellt.

$$CaR\ [\%] = \frac{Anzahl\ der\ Treffer}{Gesamtzahl\ der\ Rufzeichen} * 100$$

Eine Formel zur Berechnung der Rufzeichenerkennungsfehlerrate CaE ist nachfolgend dargestellt.

$$CaE\ [\%] = \frac{Anzahl\ der\ Ersetzungen + Anzahl\ der\ Einf\ddot{u}gungen}{Gesamtzahl\ der\ Rufzeichen} * 100$$

Eine Formel zur Berechnung der Ablehnungsrate bei der Rufzeichenerkennung CaRj ist nachfolgend dargestellt

$$CaR\ [\%] = \frac{Anzahl\ der\ Streichungen}{Gesamtzahl\ der\ Rufzeichen} * 100$$

Eine Formel zur Berechnung der Rate nicht klassifizierter Wörter UnClWR ist nachfolgend dargestellt.

$$UnclWR = \frac{Anzahl\ nicht\ klassifizierter\ W\ddot{o}rter}{Gesamtzahl\ der\ W\ddot{o}rter}$$

Ferner kann das computerimplementierte Verfahren zur Verifizierung von nicht deterministischen Modellen in sicherheitskritischen Umgebungen verwendet werden.

**Bezugszeichenliste**

| | |
|---|---|
| 5 | Computersystem |
| 10 | computerimplementierts Verfahren |
| 15 | operationelles Maschinenlernmodell |
| 15a-15n | n optimierte Maschinenlernmodelle |
| 20 | Simulationsumgebung |
| 25 | technische Kennwerte |
| 30 | operative Kennwerte |
| 35 | operatives Feedback |
| 40 | Verifikationssimulator |

**Patentansprüche**

1. Computerimplementierts Verfahren (10) zur Verifizierung von Maschinenlernmodellen in sicherheitskritischen Umgebungen, das computerimplementierte Verfahren (10) umfassend:

Ermitteln (S120) technischer Kennwerte (25) und operativer Kennwerte (30) für ein ausgewähltes operationelle Maschinenlernmodell (15) in einer Simulationsumgebung (20);
kontinuierliches Testen (S130) des ausgewählten operationellen Maschinenlernmodells (15), und wobei das kontinuierliche Testen (S130) ein Erfassen (S140) von einem operativen Feedback (35) umfasst;
Erzeugen (S150) einer Anzahl n optimierter Maschinenlernmodelle (15a-15n), wobei das Erzeugen (S150) der n optimierten Maschinenlernmodelle (15a-15n) unter Berücksichtigung des operativen Feedbacks (35) erfolgt;
Auswahl (S160) eines der n optimierten Maschinenlernmodelle (15a-15n); und

Verifizieren (S170) des ausgewählten optimierten Maschinenlernmodells (15a-15n), wobei das Verifizieren (S170) mit einem Verifikationssimulator (40) erfolgt.

2. Computerimplementiertes Verfahren (10) nach Anspruch 1, ferner umfassend:
ein Überführen (S110) des ausgewählten operationellen Maschinenlernmodells (15) in eine Simulationsumgebung (20).

3. Computerimplementiertes Verfahren (10) nach Anspruch 1 oder 2, bei welchem:
das Überführen (S110) anhand von mindestens einem von einer Erkennungsrate, einem/r Fehlerrate oder einem/s Confidence Levels erfolgt.

4. Computerimplementiertes Verfahren (10) nach einem der Ansprüche 1 bis 3, wobei:

die technischen Kennwerte (25) mindestens eines von einer Wortfehlerrate oder einer Zeichenfehlerrate umfassen,
und wobei die operativen Kennwerte (30) mindestens eines von einer Rufzeichenerkennung, einer Kommandoerkennung und einer Werteerkennung umfassen.

5. Computerimplementiertes Verfahren (10) nach einem der Ansprüche 1 bis 4, wobei:
die technischen Kennwerte (25) und/oder die operativen Kennwerte (30) mit Hilfe von Data Management ermittelt werden, und wobei bei dem Ermitteln (S120) Referenzdaten, Zeitstempel, Umgebungsdaten sowie Transkriptionen und Interpretationsergebnisse herangezogen werden.

6. Computerimplementiertes Verfahren (10) nach einem der Ansprüche 1 bis 5, wobei:
das kontinuierliche Testen (S130) anhand von Testdaten und Trainingsdaten erfolgt.

7. Computerimplementiertes Verfahren (10) nach einem der Ansprüche 1 bis 6, wobei:
das Verifizieren (S170) anhand vordefinierter Testszenarien und/oder vordefinierter Kennzahlen erfolgt.

8. Verwendung eines computerimplementierten Verfahrens (10) nach einem der Ansprüche 1 bis 7 zur Verifizierung von nicht deterministischen Modellen in sicherheitskritischen Umgebungen.


**Geänderte Patentansprüche gemäss Regel 137(2) EPÜ.**

1. Computerimplementierts Verfahren (10) zur Verifizierung von Maschinenlernmodellen in sicherheitskritischen Umgebungen, das computerimplementierte Verfahren (10) umfassend:

Ermitteln (S120) technischer Kennwerte (25) und operativer Kennwerte (30) für ein ausgewähltes operationelle Maschinenlernmodell (15) in einer Simulationsumgebung (20);
kontinuierliches Testen (S130) des ausgewählten operationellen Maschinenlernmodells (15), und wobei das kontinuierliche Testen (S130) ein Erfassen (S140) von einem operativen Feedback (35) umfasst;
Erzeugen (S150) einer Anzahl n optimierter Maschinenlernmodelle (15a-15n), wobei das Erzeugen (S150) der n optimierten Maschinenlernmodelle (15a-15n) unter Berücksichtigung des operativen Feedbacks (35) erfolgt;
Auswahl (S160) eines der n optimierten Maschinenlernmodelle (15a-15n); und
Verifizieren (S170) des ausgewählten optimierten Maschinenlernmodells (15a-15n), wobei das Verifizieren (S170) mit einem Verifikationssimulator (40) anhand vordefinierter Testszenarien und/oder vordefinierter Kennzahlen erfolgt, wobei die vordefinierten Kennzahlen mindestens eines von einer Wortfehlerrate, einer Zeichenfehlerrate, einem F-Maß, einer Kommandoerkennungsrate, einer Kommandoerkennungsfehlerrate, einer Ablehnungsrate bei der Befehlserkennung, einer Rufzeichenerkennungsrate, einer Rufzeichenerkennungsfehlerrate, einer Ablehnungsrate bei der Rufzeichenerkennung oder einer Rate nicht klassifizierter Wörter umfassen.

2. Computerimplementiertes Verfahren (10) nach Anspruch 1, ferner umfassend:
ein Überführen (S110) des ausgewählten operationellen Maschinenlernmodells (15) in eine Simulationsumgebung (20).

3. Computerimplementiertes Verfahren (10) nach Anspruch 1 oder 2, bei welchem:
das Überführen (S110) anhand von mindestens einem von einer Erkennungsrate, einem/r Fehlerrate oder einem/s Confidence Levels erfolgt.

4. Computerimplementiertes Verfahren (10) nach einem der Ansprüche 1 bis 3, wobei:

    die technischen Kennwerte (25) mindestens eines von einer Wortfehlerrate oder einer Zeichenfehlerrate umfassen,
    und wobei die operativen Kennwerte (30) mindestens eines von einer Rufzeichenerkennung, einer Kommandoerkennung und einer Werteerkennung umfassen.

5. Computerimplementiertes Verfahren (10) nach einem der Ansprüche 1 bis 4, wobei:
    die technischen Kennwerte (25) und/oder die operativen Kennwerte (30) mit Hilfe von Data Management ermittelt werden, und wobei bei dem Ermitteln (S120) Referenzdaten, Zeitstempel, Umgebungsdaten sowie Transkriptionen und Interpretationsergebnisse herangezogen werden.

6. Computerimplementiertes Verfahren (10) nach einem der Ansprüche 1 bis 5, wobei:
    das kontinuierliche Testen (S130) anhand von Testdaten und Trainingsdaten erfolgt.

7. Verwendung eines computerimplementierten Verfahrens (10) nach einem der Ansprüche 1 bis 6 zur Verifizierung von nicht deterministischen Modellen in sicherheitskritischen Umgebungen.

FIG. 1

FIG. 2

```
                              ┌─────────────┐
                              │    START    │
                              └─────────────┘
                                     │
                                     ▼
        ┌───────────────────────────────────────────────────┐
        │ Vorbereitung operationelle Eingangsgrößen         │
        │ ┌───────────────────────────────────────────────┐ │
 S100   │ │ S101: Erzeugen Testdatensatz                  │ │
        │ └───────────────────────────────────────────────┘ │
        │ ┌───────────────────────────────────────────────┐ │
        │ │ S102: Anpassen Testdatensatz                  │ │
        │ └───────────────────────────────────────────────┘ │
        │ ┌───────────────────────────────────────────────┐ │
        │ │ S103: Erzeugen Konfiguration(en)              │ │
        │ └───────────────────────────────────────────────┘ │
        │ ┌───────────────────────────────────────────────┐ │
        │ │ S104: Trainieren und Überprüfen               │ │
        │ │ operationellen Maschinenlernmodelle (15)      │ │
        │ └───────────────────────────────────────────────┘ │
        └───────────────────────────────────────────────────┘
```

S105 — Auswählen des operationellen Maschinenlernmodells (15)

S110 — Überführen des ausgewählten operationellen Maschinenlernmodells (15) in eine Simulationsumgebung (20)

S120 — Ermitteln technischer Kennwerte (25) und operativer Kennwerte (30) für ein ausgewähltes operationelles Maschinenlernmodell (15)

S130 — Kontinuierliches Testen des ausgewählten operationellen Maschinenlernmodells (15)

S140 — Erfassen von einem operativen Feedback (35)

S150 — Erzeugen einer Anzahl n optimierter Maschinenlernmodelle (15a-15n)

S160 — Auswahl eines der n optimierten Maschinenlernmodelle (15a-15n)

S170 — Verifizieren des ausgewählten optimierten Maschinenlernmodells (15a-15n)

ENDE

Europäisches
Patentamt

European
Patent Office

Office européen
des brevets

**EUROPÄISCHER RECHERCHENBERICHT**

Nummer der Anmeldung

**EP 22 21 0070**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/141882 A1 (SK HOLDINGS CO LTD [KR]) 9. Juli 2020 (2020-07-09)<br>* Seite 4, Absatz 0028 – Absatz 0030 *<br>* Seite 6, Absatz 0065; Abbildung 11 *<br>----- | 1-8 | INV.<br>G06N3/02<br>G06N3/094<br>G06N20/00 |
| A | OHNEISER OLIVER ET AL: "Prediction and extraction of tower controller commands for speech recognition applications", JOURNAL OF AIR TRANSPORT MANAGEMENT, PERGAMON, AMSTERDAM, NL, Bd. 95, 7. Juni 2021 (2021-06-07), XP086696365, ISSN: 0969-6997, DOI: 10.1016/J.JAIRTRAMAN.2021.102089 [gefunden am 2021-06-07]<br>* Section 5.3; Seite 8, letzter Absatz *<br>* Section 5.4; Seite 8, Absatz erste *<br>----- | 1-8 | |
| A | HELMKE HARTMUT ET AL: "Machine Learning of Air Traffic Controller Command Extraction Models for Speech Recognition Applications", 2020 AIAA/IEEE 39TH DIGITAL AVIONICS SYSTEMS CONFERENCE (DASC), IEEE, 11. Oktober 2020 (2020-10-11), Seiten 1-9, XP033858707, DOI: 10.1109/DASC50938.2020.9256484 [gefunden am 2020-11-10]<br>* Seite 2; Abbildung 1 *<br>----- | 1-8 | RECHERCHIERTE SACHGEBIETE (IPC)<br><br>G06N |

Der vorliegende Recherchenbericht wurde für alle Patentansprüche erstellt

| Recherchenort | Abschlußdatum der Recherche | Prüfer |
|---|---|---|
| Den Haag | 11. Mai 2023 | Fonseca dos Santos |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 0070

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2023

| Im Recherchenbericht angeführtes Patentdokument | Datum der Veröffentlichung | Mitglied(er) der Patentfamilie | Datum der Veröffentlichung |
|---|---|---|---|
| WO 2020141882 A1 | 09-07-2020 | EP 3907618 A1 | 10-11-2021 |
| | | KR 20200092447 A | 04-08-2020 |
| | | US 2022066905 A1 | 03-03-2022 |
| | | WO 2020141882 A1 | 09-07-2020 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GOODFELLOW, IAN ; NICOLAS PAPERNOT.** The Challenge of Verification and Testing of Machine Learning. *Cleverhans,* 14. Juni 2017, http://www.cleverhans.io/security/privacy/ml/2017/06/14/verification.html

- **PAPERNOT, NICOLAS et al.** Towards the science of security and privacy in machine learning. *arXiv:1611.03814,* 2016